# EUROPEAN PATENT APPLICATION

(11) **EP 4 610 862 A1**
(43) Date of publication of application: **03.09.2025**
(21) Application number: 25160383.3
(22) Date of filing: 26.02.2025
(51) Int. Cl.: G06F 21/60

(54) **MEDIA SANITISATION SYSTEM AND METHOD**

(30) Priority: 28.02.2024 GB 202402836
(71) Applicant: Data Safe Solutions Ltd, Liverpool L3 1BY (GB)
(72) Inventor: JOHNSTON, Derek, Liverpool, L25 7SA (GB); LITTLEWOOD, Christopher, Ellesmere Port, CH66 3PE (GB); GORCZYNSKI, Rafal, Ellesmere Port, CH66 4LL (GB)
(74) Representative: Forresters IP LLP

(57) **Abstract**

Disclosed is a computer-implemented media sanitisation method for automatically sanitising a computer-readable storage medium, the method, comprising: establishing a communications link between a target device and a media sanitisation module, wherein the target device includes a target computer-readable storage medium; sending, using the communications link, target device characterisation parameters from the target device to the media sanitisation module; automatically determining, at the media sanitisation module, a data sanitisation method associated with the target device characterisation parameters; automatically sending, using the communications link, an indication of the data sanitisation method from the media sanitisation module to the target device; and automatically executing, at the target device, the data sanitisation method to sanitise the target computer-readable storage medium.

## Description

### FIELD

The invention relates to media sanitisation systems and methods, which may be used to render data irretrievable from a storage device, for example.

### BACKGROUND

Data security is of paramount importance in our increasingly digital world.

Storage devices such as hard drives typically contain vast quantities of personal data, which can include confidential or sensitive data, such as passwords or data relating to health records or financial information. Disposing of such devices safely is difficult, as a third party who gains access to the device may be able to recover some or all of the data stored thereon. In some cases, data which a user may think has been securely deleted is still recoverable. There is, therefore, a significant risk that a third party may be able to recover data from a storage device, even if a user thinks their data has been safely deleted.

A safe, secure, and reliable media sanitisation system and method is, therefore, required.

The present invention aims to alleviate problems associated with the prior art.

### BRIEF DESCRIPTION OF THE INVENTION

Disclosed is a computer-implemented media sanitisation method for automatically sanitising a computer-readable storage medium, the method comprising: establishing a communications link between a target device and a media sanitisation module, wherein the target device includes a target computer-readable storage medium; sending, using the communications link, target device characterisation parameters from the target device to the media sanitisation module; automatically determining, at the media sanitisation module, a data sanitisation method associated with the target device characterisation parameters; automatically sending, using the communications link, an indication of the data sanitisation method from the media sanitisation module to the target device; and automatically executing the data sanitisation method to sanitise the target computer-readable storage medium.

The method may further include executing an asset inventory submodule on the target device.

Establishing the communications link may include characterising a host adapter associated with the target computer-readable storage medium.

The target device characterisation parameters may include one or more of a target device make, target device model, target device serial number, target computer-readable storage medium type, target computer-readable storage medium size, target computer-readable storage medium communication protocol, and/or a security layer.

The method may further include: if the target device characterisation parameters indicate that the target device has a security layer that is compatible with the media sanitisation module, executing the data sanitisation method, and if the target device characterisation parameters indicate that the target device has a security layer that is incompatible with the media sanitisation module, rejecting the target device.

The method may further include: determining a health status of the target computer-readable storage medium; if the health status indicates that the target computer-readable storage medium is healthy, executing the data sanitisation method; and if the health status indicates that the target computer-readable storage medium is faulty, rejecting the target device.

The method may further include notifying a user if the target device is rejected.

The health status may be determined by performing a read and write test on the target computer-readable storage medium.

The health status may be determined by obtaining health data from a target device diagnostic monitoring system stored on the target computer-readable storage medium.

The target device diagnostic monitoring system may be a Self-Monitoring, Analysis, and Reporting Technology (SMART) system.

The method may further include verifying the target computer-readable storage medium has been sanitised.

The method may further include notifying a user if the sanitisation succeeded or failed.

The verification may be performed by: writing verification data to the target computer-readable storage medium before executing the data sanitisation method; verifying, before executing the data sanitisation method, that the verification data has been successfully written to the target computer-readable storage medium; and after executing the data sanitisation method, attempting to recover the verification data from the target computer-readable storage medium, wherein the sanitisation succeeded if the verification data is unrecoverable after execution of the data sanitisation method.

The method may further include generating a certificate if the sanitisation succeeded.

The data sanitisation method may include a primary data sanitisation method and a fallback data sanitisation method, and the media sanitisation method includes: executing, at the target device, the primary data sanitisation method; and if the primary data sanitisation method failed to sanitise the target computer-readable storage medium, executing, at the target device, the fallback data sanitisation method to sanitise the target computer-readable storage medium.

Also disclosed is a media sanitisation method, comprising: carrying out a computer-implemented method as above; and generating a computer-readable code linking to the certificate and tagging the target device with the computer-readable code.

Also disclosed is a computer-implemented media sanitisation method, comprising: sending target device characterisation parameters from a target device to a media sanitisation module, wherein the target device includes a target computer-readable storage medium; receiving, at the target device, an indication of a data sanitisation method associated with the characterisation parameters; and executing, at the target device, the data sanitisation method to sanitise the target computer-readable storage medium.

Also disclosed is a computer-implemented media sanitisation method, comprising: receiving, at a media sanitisation module, target device characterisation parameters; determining, at the media sanitisation module, a data sanitisation method associated with the characterisation parameters; and sending an indication of the data sanitisation method from the media sanitisation module to a target device.

Also disclosed is a computer-readable medium storing instructions which, when executed by a processor or processors, cause a method as above to be performed.

Also disclosed is a media sanitisation apparatus comprising a sanitisation processor operably coupled to a sanitisation computer-readable storage medium storing a media sanitisation module thereon, wherein: the media sanitisation apparatus is configured to run the media sanitisation module using the sanitisation processor, and the media sanitisation module is configured to: obtain target device characterisation parameters from a target device; automatically determine a data sanitisation method associated with the characterisation parameters and to send an indication of the data sanitisation method to the target device; and automatically execute the data sanitisation method to sanitise a target computer-readable storage medium of the target device.

Also disclosed is a system comprising the media sanitisation apparatus and the target device.

Also disclosed is a system, comprising: a media sanitisation apparatus comprising a sanitisation communications subsystem and a sanitisation processor operably coupled to a sanitisation computer-readable storage medium storing a media sanitisation module thereon; and a target device comprising a target processor, a target computer-readable storage medium, and a target communications subsystem, wherein: the media sanitisation apparatus is configured to run the media sanitisation module using the sanitisation processor, the media sanitisation module and target device are configured to communicate using the sanitisation communications subsystem and target communications subsystem, the media sanitisation module is configured to obtain target device characterisation parameters from the target device, the media sanitisation module is configured to determine a data sanitisation method associated with the characterisation parameters and to send an indication of the data sanitisation method to the target device, and the target device is configured to execute, using the target processor, the data sanitisation method to sanitise the target computer-readable storage medium.

Also disclosed is a target device comprising a processor, a target computer-readable storage medium, and a communications subsystem, the target device configured to: send, using the communications subsystem, target device characterisation parameters to a media sanitisation module; receive, using the communications subsystem, an indication of a data sanitisation method associated with the characterisation parameters; and execute, using the processor, the data sanitisation method to sanitise the target computer-readable storage medium.

Also disclosed is a media sanitisation apparatus comprising a communications subsystem and a processor operably coupled to a computer-readable storage medium storing a media sanitisation module thereon, the media sanitisation apparatus configured to:
run, using the processor, the media sanitisation module;
receive, using the communications subsystem, target device characterisation parameters;
determine, using the media sanitisation module, a data sanitisation method associated with the characterisation parameters; and
send, using the communications subsystem, an indication of the data sanitisation method to a target device.

### BRIEF DESCRIPTION OF THE FIGURES

In order that the present disclosure may be more readily understood, preferable embodiments thereof will now be described, by way of example only, with reference to the accompanying drawings, in which:
Fig. 1 is a schematic illustration of a target device according to the disclosed technology;
Fig. 2 is a schematic illustration of a media sanitisation device according to the disclosed technology;
Fig. 3 is a schematic illustration of a system according to the disclosed technology;
Fig. 4 is a schematic illustration of a media sanitisation module according to the disclosed technology;
Fig. 5 shows a method according to the disclosed technology; and
Fig. 6 is a schematic illustration of a system according to the disclosed technology.

### DETAILED DESCRIPTION OF THE DISCLOSURE

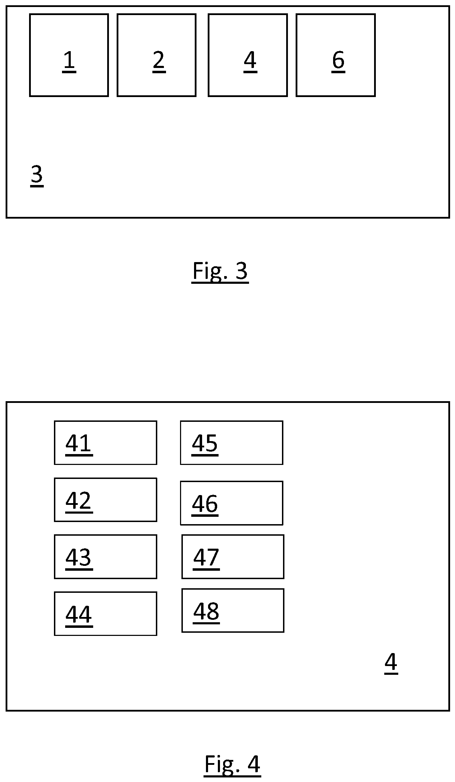

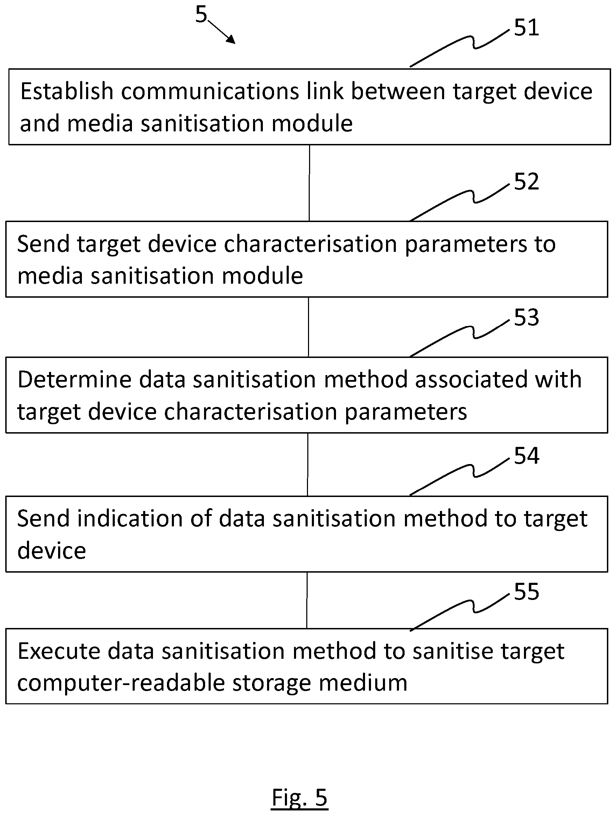

The technology includes a media sanitisation system 3 (see e.g. Fig. 3) and method (see e.g. Fig. 5).

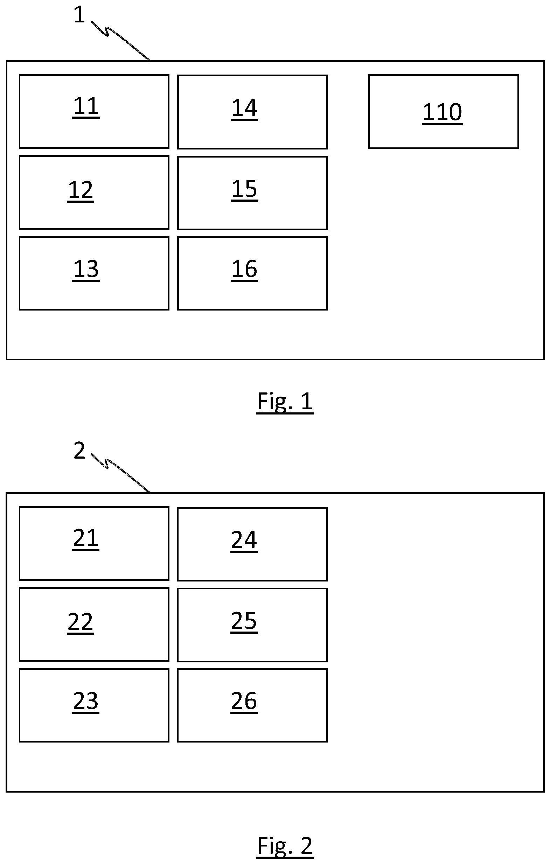

The media sanitisation system 3 may include a target device 1 (see e.g. Fig. 1). The target device 1 may be a computing device, such as a desktop computer, laptop, smartphone, tablet, or the like. The target device 1 may include one or more components, such as a target computer-readable storage medium 11, a target processor 12, a target communications subsystem 13, a target power source 14, one or more target output devices 15, and/or one or more target input devices 16, each of which may be operably coupled to the other components of the target device 1. The target device 1 may include only a subset of the components. For example, the target device 1 may include at least the target computer-readable storage medium 11, and may optionally include the target processor 12, target communications subsystem 13, target power source 14, one or more target output devices 15, and/or one or more target input devices 16 in some versions.

The target computer-readable storage medium 11 may include any kind of computer-readable memory. The target computer-readable storage medium 11 may be a non-transitory and/or non-volatile computer-readable storage medium. The target computer-readable storage medium 11 may include flash memory, magnetic memory, a hard disk drive (HDD) and/or a solid state drive (SSD), for example.

The target device 1 may include one or more host adapters 110, which may be associated with the target computer-readable storage medium 11. The target device 1 may include one or more host adapters 110 which may interface with the target computer-readable storage medium 11. The one or more host adapters 110 may include one or more SCSI, SAS, NVMe, Fibre Channel, and/or SATA host adapters. The target computer-readable storage medium 11 may be operably coupled to the associated host adapter 110.

Accordingly, the target computer-readable storage medium 11 may include a SCSI, SAS, NVMe, Fibre Channel, and/or SATA computer-readable storage medium (which may be a magnetic or flash medium, for example). For example, the target computer-readable storage medium 11 may include SATA magnetic memory, SATA flash memory, SAS magnetic memory, SAS flash memory, and/or SCSI magnetic memory.

The target computer-readable storage medium 11 may include a plurality of sub-storage media, which may be the same or different types of storage media. For example, the target computer-readable storage medium 11 may include a flash sub-storage medium and a magnetic sub-storage medium. The target computer-readable storage medium 11 may, therefore, include a first sub-storage medium and a second sub-storage medium. The sub-storage media may be distributed sub-storage media, i.e. the sub-storage media may not be located in the same physical location.

The target processor 12 may include a single processor or a plurality of processors. The target processor 12 may include a central processing unit (CPU), for example. The target processor 12 may execute or otherwise perform instructions and methods as described herein.

The target communications subsystem 13 may enable the target device 1 to communicate with external devices. The target communications subsystem 13 may include a communications interface and/or bus configured for communication with external devices, for example.

The target power source 14 may provide operating power for the target device 1. The target power source 14 may include a battery, for example in the case of a laptop, smartphone, or tablet. The target device 1 may additionally or alternatively be operably coupleable to a power supply to supply power for the operation of the target device 1.

The one or more target output devices 15 may include a display and/or speaker. The display may display a user interface, such as a graphical user interface, which may display information to a user.

The one or more target input devices 16 may include a touchscreen, mouse, keyboard, or the like. A user may interact with the target device 1 using the one or more target input devices 16.

The media sanitisation system 3 may include a media sanitisation apparatus 2 (see e.g. Fig. 2). The media sanitisation apparatus 2 may include one or more components, such as a sanitisation computer-readable storage medium 21, a sanitisation processor 22, a sanitisation communications subsystem 23, a sanitisation power source 24, one or more sanitisation output devices 25, and/or one or more sanitisation input devices 26, each of which may be operably coupled to the other components of the media sanitisation apparatus 2.

The sanitisation computer-readable storage medium 21 may include any kind of computer-readable memory. The sanitisation computer-readable storage medium 21 may be a non-volatile computer-readable storage medium. The sanitisation computer-readable storage medium 21 may include flash memory, magnetic memory, a hard disk drive (HDD) and/or a solid state drive (SSD).

The sanitisation processor 22 may include a single processor or a plurality of processors. The sanitisation processor 22 may include a central processing unit (CPU), for example. The sanitisation processor 22 may execute or otherwise perform instructions and methods as described herein.

The sanitisation communications subsystem 23 may enable the media sanitisation apparatus 2 to communicate with external devices. The sanitisation communications subsystem 23 may include a communications interface and/or bus configured for communication with external devices, for example.

The target communications subsystem 13 and sanitisation communications subsystem 23 may be configured to facilitate communication between the target device 1 and the media sanitisation apparatus 2.

The sanitisation power source 24 may provide operating power for the media sanitisation apparatus 2. The sanitisation power source 24 may include a battery. The media sanitisation apparatus 2 may additionally or alternatively be operably coupleable to a power supply to supply power for the operation of the media sanitisation apparatus 2.

The one or more sanitisation output devices 25 may include a display and/or speaker. The display may provide a user interface, such as a graphical user interface, which may display information to a user.

The one or more sanitisation input devices 26 may include a touchscreen, mouse, keyboard, or the like. A user may interact with the media sanitisation apparatus 2 using the one or more input devices 16.

The media sanitisation system 3 may include a media sanitisation module 4 (see e.g. Fig. 4). The media sanitisation module 4 may comprise computer program instructions which may be executable by a processor such as the target processor 12 or the sanitisation processor 22. The media sanitisation module 4 may be stored on a computer-readable storage medium, such as a non-transitory computer-readable storage medium. The media sanitisation module 4 may be stored on the sanitisation computer-readable storage medium 21. The media sanitisation module 4 may, therefore, be a computer program embodied on a non-transitory computer readable storage medium.

A computer program may be written in a programming language, including compiled or interpreted languages, or declarative or procedural languages. A computer program may include a unit suitable for use in a computing environment, including as a stand-alone program, a module, a component, or a subroutine. A computer program may or may not correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one or more computer processors located locally at one site or distributed across multiple remote sites and interconnected by a communication network.

The media sanitisation module 4 may be a distributed media sanitisation module 4. A part of the media sanitisation module 4 may run or execute on a first processor and a part of the media sanitisation module 4 may run or execute on a second processor. For example, a part of the media sanitisation module 4 may run or execute on the target processor 12 and a part of the media sanitisation module 4 may run or execute on the sanitisation processor 22 and/or processor of a remote device 6. Similarly, a part of the media sanitisation module 4 may be stored on a first computer-readable storage medium and a part of the media sanitisation module 4 may be stored on a second computer-readable storage medium.

The media sanitisation module 4 may include a plurality of submodules. The media sanitisation module 4 may include one or more of a supervisor submodule 41, a communications submodule 42, a healthcheck submodule 43, a method selection submodule 44, a tracking submodule 45, a verification submodule 46, a reporting submodule 47, and/or an asset inventory submodule 48. Each submodule may be operably coupled to each other submodule and/or to the supervisor submodule 41.

The supervisor submodule 41 may supervise and/or control the operation of the media sanitisation module 4. The communications submodule 42 may handle communication with other programs, modules, applications, or devices, for example through an application programming interface. The communications submodule 42 may also handle communications between submodules of the media sanitisation module 4. The healthcheck submodule 43 may determine a health status of the target device 1 or target computer-readable storage medium 11. The method selection submodule 44 may determine a data sanitisation method for the target computer-readable storage medium 11. The tracking submodule 45 may track the operation of at least a part of the media sanitisation method, for example if the media sanitisation module 4 is operably coupled to a plurality of target devices 1 simultaneously. The verification submodule 46 may verify that the data sanitisation method succeeded. The reporting submodule 47 may report the outcome of the data sanitisation method to a user. The asset inventory submodule 48 may characterise the target device 1.

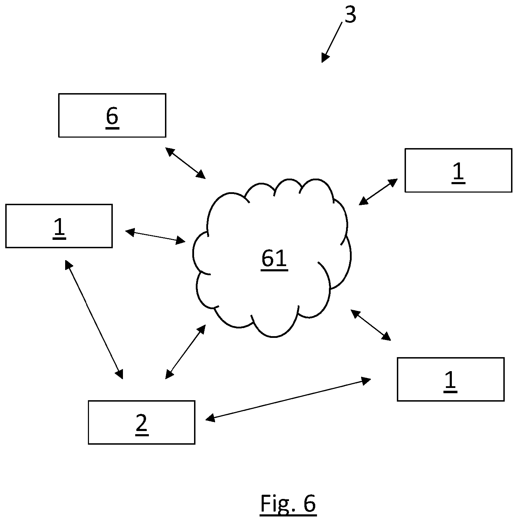

The media sanitisation system 3 may include a remote device 6 (see e.g. Fig. 6). The remote device 6 may be a computing device 6, and may therefore include a processor and non-transitory computer-readable storage medium. The remote device 6 may be cloud-based. The remote device 6 may be remote from the target device 1. The remote device 6 may be communicatively coupled to the target device 1 by a wired or wireless communications link. The remote device 6 may be communicatively coupled to the target device 1 through a network 61. The remote device 6 may be communicatively coupled to a plurality of target devices 1.

The media sanitisation module 4 may be stored on the remote device 6, e.g. on the non-transitory computer-readable storage medium thereof. The media sanitisation module 4 may run or execute on the remote device 6. In some versions, therefore, the media sanitisation module 4 may be hosted in the cloud and may communicate with the target device 1 over a network such as the network 61.

In some versions the media sanitisation apparatus 2 may be communicatively coupled with the network 61. The media sanitisation apparatus 2 may be communicatively coupled to the target device 1 directly and/or through the network 61. The media sanitisation apparatus 2 may be communicatively coupled to a plurality of target devices 1, either directly or through the network 61.

The media sanitisation module 4 may, therefore, be communicatively coupled with a plurality of target devices 1.

The media sanitisation module 4 may be configured to sanitise the target computer-readable storage medium 11.

Media sanitisation is a process that renders data written on media unrecoverable. Accordingly, by sanitising the target computer-readable storage medium 11, the media sanitisation module 4 can render data previously written on the target computer-readable storage medium 11 unrecoverable. Following sanitisation, the target computer-readable storage medium 11 can then be re-used without the risk of previously-stored data being recoverable by a new user, for example.

An advantage of the present technology is that, following sanitisation, the target computer-readable storage medium 11 remains functional, and can be re-used.

The present technology includes a media sanitisation method.

The media sanitisation method may be implemented at least in part by the media sanitisation module 4, and at least a part of the media sanitisation method may be carried out automatically, i.e. without user interaction (and in particular may be carried out automatically by the media sanitisation module 4). In some cases, a part of the media sanitisation method may be implemented by the target device 1 and/or by a user.

The media sanitisation method may include running the media sanitisation module 4. The media sanitisation module 4 may display a user interface, which may be displayed on the target output device 15 or sanitisation output device 25. Once running, the media sanitisation module 4 may execute the media sanitisation method automatically, i.e. without requiring any user interaction or input. In some versions a user may provide an initial input to the media sanitisation module 4, e.g. a run command, in order to initiate the media sanitisation method, and the media sanitisation module 4 may then execute the media sanitisation method without further user input or interaction.

The media sanitisation module 4, for example the asset inventory submodule 48, may read data from the target computer-readable storage medium 11 (and this may be done automatically without user input). The asset inventory submodule 48 may write data to the target computer-readable storage medium 11. The asset inventory submodule 48 may interface with hardware components of the target device 1. The asset inventory submodule 48 may provide one or more of the following functionalities: characterise hardware specifications of the target device 1; characterise hardware specifications of peripheral devices connected to the target device 1; communicate with an application programming interface (API); communicate with other submodules of the media sanitisation module 4 via the API; execute data sanitisation methods; perform hardware tests; and share a hardware-software interface with other submodules of the media sanitisation module 4, such as the communications submodule 42.

The media sanitisation method may include characterising the target device 1 (and this may be done automatically without user input). This may include determining target device characterisation parameters for the target device 1. The target device characterisation parameters may be associated with one or more components of the target device 1. The target device characterisation parameters may be retrieved from a system information log stored on the target device 1, such as on the target computer-readable storage medium 11.

The target device characterisation parameters may include one or more of a target device make, target device model, target device serial number, target computer-readable storage medium type, target computer-readable storage medium size, target computer-readable storage medium communication protocol, and/or a security layer.

For example, the target computer-readable storage medium type could include flash or magnetic memory. The target computer-readable storage medium size could indicate storage capacity, for example measured in bytes, gigabytes, or terabytes. The target computer-readable storage medium communication protocol could include SAS, SCSI, SATA, or NVMe. The security layer could include TCG Opal or ATA security.

The target device characterisation may be performed by the asset inventory submodule 48. The target device characterisation parameters may be sent to another submodule of the media sanitisation module 4, such as the method selection submodule 44, and this may be via the communications submodule 42.

Characterising the target device 1 may include characterising a host adapter associated with the target computer-readable storage medium 11 (and this may be done automatically without user input). The host adapter may include a SATA, ATA, SAS, SCSI, or NVMe host adapter. The host adapter type may be considered a target device characterisation parameter.

The media sanitisation method may include determining a configuration mode of the target device host adapter. For example, a SATA or ATA adapter may be configured in a PATA/IDE, AHCI, or RAID mode. A SAS or SCSI adapter may be configured in a RAID or HBA mode. The media sanitisation method may include determining if a configuration mode of the host adapter is compatible with the media sanitisation module 4. If the host adapter configuration mode is not compatible with the media sanitisation module 4, the target device 1 may be rejected by the media sanitisation module 4, and a notification may be issued to the user indicating that the target device 1 has been rejected (e.g. via the output device 15 or 25 such as by a visual notification on the display). For example, for a SATA adapter, the AHCI mode may be compatible with the media sanitisation module 4, but the PATA/IDE and RAID modes may be incompatible. Therefore, if the host adapter is configured in the AHCI mode, the media sanitisation method may continue to a data sanitisation step, but if the host adapter is configured in the PATA/IDE or RAID mode, the media sanitisation method may end before data sanitisation. The media sanitisation module 4 may include, or may have access to, a predetermined list of compatible configuration modes, for example, and the host adapter configuration mode may be deemed incompatible by the media sanitisation module 4 (e.g. by the communications submodule 42 and/or supervisor submodule 41 thereof) if the determined configuration mode is not stored in the predetermined list of compatible configuration modes.

The media sanitisation method may include establishing a communications link between the target device 1 and the media sanitisation module 4 (and this may be done automatically without user input). Establishing the communications link may include characterising the target device host adapter (e.g. host adapter associated with the target computer-readable storage medium 11). The communications link may use, at least in part, the configuration mode of the host adapter, such as SATA, ATA, SAS, SCSI, NVMe etc. The communications link may be a wired or wireless communications link.

The media sanitisation method may include detecting the target computer-readable storage medium 11, and this may be performed by the asset inventory submodule 48 (and this may be done automatically without user input). For example, once the target device host adapter has been characterised (e.g. by the asset inventory submodule 48), the method may include scanning for devices compatible with the host adapter (e.g. configured in the same mode such as SAS or SATA etc.). The target computer-readable storage medium 11 may be compatible with the host adapter, and may therefore be detected by the asset inventory submodule 48.

A command set associated with the target computer-readable storage medium 11 may be determined by the asset inventory submodule 48 (and this may be done automatically without user input). The command set may include ATA/ATAPI command set, SCSI command set, SAT command set NVM command set, for example. The asset inventory submodule 48may check if the target computer-readable storage medium supports any of a predetermined list of command sets (e.g. by attempting to communicate with the target computer-readable storage medium 11 using each command set), and may determine which command set or sets are supported by the target computer-readable storage medium 11. If no command sets are supported by the target computer-readable storage medium 11, the media sanitisation module 4 may reject the target device 1 as described previously, and the user may be notified as described previously (e.g. via the output device 15 or 25, which may include a display).

The command set associated with the target computer-readable storage medium 11 may be used to determine one or more of the target device characterisation parameters (and this may be done automatically without user input). For example, the target computer-readable storage medium type, target computer-readable storage medium size, target computer-readable storage medium communication protocol, and/or security layer may be determined using the identified command set. This may be performed by the asset inventory submodule 48.

For example, for a SATA target computer-readable storage medium 11, the ATA/ATAPI command set may be used to determine one or more target device characterisation parameters. For a SAS or SCSI target computer-readable storage medium 11, the ATA/ATAPI command set, and optionally SAT command set if supported, may be used to determine one or more target device characterisation parameters. For a NVMe target computer-readable storage medium 11, the ATA/ATAPI command set, and optionally the SCSI command set if supported, may be used to determine one or more target device characterisation parameters.

As described, the target device characterisation parameters may include a security layer. For example, the target device characterisation parameters may indicate the presence or absence of a security layer or a type of security layer (and an absence of a security layer may be considered a type of security layer, i.e. no security layer). The security layer may be associated with the target computer-readable storage medium 11. For example, the security layer may include a TCG Opal security layer or a ATA security layer. The determined security layer parameter may be checked against a predefined list of security layer parameters, for example the security layer type may be checked against a list of known security layers. The list of security layers may indicate if each security layer is compatible or incompatible with the media sanitisation module 4. If the security layer is compatible with the media sanitisation module 4, the media sanitisation method may continue to a data sanitisation step, but if the security layer is incompatible with the media sanitisation module 4, the target device 1 may be rejected as described previously and a user may be notified (e.g. via display 15 or 25). The media sanitisation module 4 may include, or may have access to, the predefined list of security layer parameters.

The media sanitisation method may include determining a health status of the target computer-readable storage medium 11 (and this may be done automatically without user input). If the health status indicates that the target computer-readable storage medium 11 is healthy, the media sanitisation method may continue to a data sanitisation step; if the health status indicates that the target computer-readable storage medium 11 is faulty, the target device 1 may be rejected as described previously, and a user may be notified as described previously (e.g. via display 15 or 25).

The health status of the target computer-readable storage medium 11 may be determined by performing a read and write test on the target computer-readable storage medium 11 (and this may be done automatically without user input). If data is successfully written and read, the target computer-readable storage medium 11 may be deemed healthy. If the data cannot be written and/or read, the target computer-readable storage medium 11 may be deemed faulty.

The health status may be determined by obtaining health data from a target device diagnostic monitoring system stored on the target computer-readable storage medium 11 (and this may be done automatically without user input). The health data may be obtained using a corresponding command of the identified command set. For example, the target device diagnostic monitoring system may include, or may be, a Self-Monitoring, Analysis, and Reporting Technology (SMART) system. Health data may be retrieved from the SMART system using a corresponding command. SATA, SAS/SCSI, and NVMe devices support SMART.

For a SAS/SCSI target computer-readable storage medium 11, the health data may additionally or alternatively be obtained using a diagnostic command, such as SCSI SEND DIAGNOSTIC and/or RECEIVE DIAGNOSTIC RESULTS from the SCSI command set. For a NVMe target computer-readable storage medium 11, a self-test log command from the NVM commands set may be used.

The health status may be determined by the asset inventory submodule 48 and/or the asset inventory submodule 48 may obtain health data from the target computer-readable storage medium 11 and send the health data to another submodule of the media sanitisation module 4 to determine the health status (and this may be done automatically without user input). The health data may be received at the healthcheck submodule 43 (e.g. via the communications submodule 42), and the healthcheck submodule 43 may determine the health status using the health data.

The healthcheck submodule 43 may send a write and read command to the target device 1 (e.g. via the asset inventory submodule 48) and may verify if the write and read operation succeeded.

The media sanitisation method may include attempting to retrieve health data using SMART or a corresponding command of the identified command set, and if no health data is retrievable using SMART or the corresponding command, performing the read and write test as a fallback method (and this may be done automatically without user input). This may be performed by the healthcheck submodule 43 and/or asset inventory submodule 48.

In some versions the media sanitisation method may not include determining a health status of the target computer-readable storage medium 11.

The media sanitisation method may include determining a data sanitisation method for the target computer-readable storage medium 11 (and this may be done automatically without user input). The data sanitisation method may be associated with the target device characterisation parameters. For example, the data sanitisation method may be determined using a methods definition table. The determined data sanitisation method may be a data sanitisation method that is predefined as being the most secure data sanitisation method for the target computer-readable storage medium 11 and/or target device 1. The methods definition table may list the most secure data sanitisation method for a set of reference devices and/or reference computer-readable storage media 11. The methods definition table may, therefore, include a list of reference devices 1 and/or reference computer-readable storage media 11, and associated data sanitisation methods. The methods definition table may include predefined reference device characterisation parameters for each reference device and/or reference computer-readable storage medium.

The data sanitisation method may be determined by the method selection submodule 44 (and this may be done automatically without user input). For example, the method selection submodule 44 may receive the one or more target device characterisation parameters (e.g. via the communications submodule 42) and may determine the data sanitisation method for the target computer-readable storage medium 11 based on the target device characterisation parameters. The method selection submodule 44 may use the target device characterisation parameters to identify a closest match in the methods definition table.

For example, in some cases, a direct match may be found in the methods definition table. However, in other cases, the methods definition table may not include a direct match for the target computer-readable storage medium 11 or the target device 1. In such cases, the method selection submodule 44 may determine a closest match based on the target device characterisation parameters. For example, the method selection submodule 44 may compare the received target device characterisation parameters with the reference device characterisation parameters stored in the methods definition table and may determine a reference device having the most device characterisation parameters in common with the target device 1. The method selection submodule 44 may then select the data sanitisation method associated with the most similar reference device and/or reference computer-readable storage medium.

In some cases, the method selection submodule 44 may score the correlation between the target device characterisation parameters and the reference device characterisation parameters stored in the methods definition table. The reference device or reference computer-readable storage medium having the best (e.g. highest) score may be considered the most similar to the target device 1 or target computer-readable storage medium 11. The method selection submodule 44 may then select the data sanitisation method associated with the highest scoring reference device or reference computer-readable storage medium.

The method selection submodule 44 may apply a threshold test to the score. If no score exceeds the predefined threshold, the method selection submodule 44 may select a fallback data sanitisation method, or may reject the target device 1. In some cases, if no score exceeds the predefined threshold, the method selection submodule 44 may select a plurality of data sanitisation methods. For example, the method selection submodule 44 may select a predefined number of data sanitisation methods depending on the score. For example, if the score falls below a predefined threshold, the method selection submodule may select a plurality, such as two or three, of highest-scoring data sanitisation methods. This may increase the chance of successfully sanitising an unknown target device, for example.

Each selected data sanitisation method may include a primary data sanitisation method and a fallback data sanitisation method. The fallback data sanitisation method may be used if the primary data sanitisation method fails to sanitise the target computer-readable storage medium 11. A plurality of fallback data sanitisation methods may be defined, with associated priorities indicating an order in which the fallback methods should be attempted. For example, if the primary data sanitisation method fails to sanitise the target computer-readable storage medium 11, a first fallback data sanitisation method may be attempted, and if the first fallback data sanitisation method fails to sanitise the target computer-readable storage medium 11, a second fallback data sanitisation method may be attempted, and so on.

The media sanitisation method (and in particular, selecting the data sanitisation method) may, therefore, include defining a series of data sanitisation methods with associated weights or priorities indicating the order in which the series of data sanitisation methods should be executed.

The selected data sanitisation method may include a command set to be executed by the target device 1. Each command in the command set may have a priority defining the order in which the commands are executed.

The media sanitisation method may include verifying that the selected data sanitisation method is compatible with the target device 1 and/or target computer-readable storage medium 11 (and this may be done automatically without user input). For example, the media sanitisation method may include checking one or more target device characterisation parameters against one or more requirements associated with the selected data sanitisation method. For example, the requirements may include a required computer-readable storage medium type, a required command set, a required sector size for the computer-readable storage medium, or other required features or attributes of the computer-readable storage medium.

If the target computer-readable storage medium 11 does not meet the requirements, another data sanitisation method may be selected (which may be the next highest scoring method, for example).

In some cases the verification may be carried out for the primary data sanitisation method and, if the target computer-readable storage medium 11 or target device 1 does not meet the requirements, the fallback method may be selected instead. If the target computer-readable storage medium 11 or target device 1 also does not meet the requirements for any fallback data sanitisation method, the media sanitisation module 4 may reject the target device 1, and may notify the user as described previously.

The media sanitisation method may include sending an indication of the selected data sanitisation method to the target device 1 (and this may be done automatically without user input). The indication may be sent from the method selection submodule 44 to the asset inventory submodule 48. In some cases the indication of the selected data sanitisation method may include the instructions required to execute the selected data sanitisation method. In some cases the indication of the selected data sanitisation method may indicate which method to perform, and the relevant commands or instructions may be retrieved from elsewhere. For example, the asset inventory submodule 48may have access to a set of data sanitisation methods, and the method selection submodule 44 may tell the asset inventory submodule 48 which data sanitisation method to perform.

The indication of the selected data sanitisation method may specify the series of primary and fallback data sanitisation methods to be executed, and may include the weights or priorities indicating the order in which the series of methods should be executed.

The media sanitisation method may include executing or performing the selected data sanitisation method (and this may be done automatically without user input). The selected data sanitisation method may be performed or executed by the target processor 12 and/or the sanitisation processor 22. The selected data sanitisation method may sanitise the target computer-readable storage medium 11, i.e. may render data written to the target computer-readable storage medium 11 unrecoverable.

Examples of data sanitisation methods include purge and/or clear techniques. The purge and/or clear techniques may meet the definitions of purge and/or clear set out in the NIST 800-88 standard, for example. A clear technique may include overwriting user-addressable storage space on the target computer-readable storage medium 11 with non-sensitive data. This may include overwriting all user-addressable locations. A purge technique may include an overwrite, block erase, and/or cryptographic erase command, and may be executed using a standardised device sanitise command. The data sanitisation method selected by the method selection submodule 44 may, therefore, include an indication of a selected sanitise command.

For example, a primary data sanitisation method may include a first purge technique, and a fallback data sanitisation method may include a second purge technique. If no purge techniques succeed in sanitising the target computer-readable storage medium 11, a fallback clear technique may be attempted, for example. Similarly, a primary data sanitisation method may include a first clear technique, and a fallback data sanitisation method may include a second clear technique, for example.

The media sanitisation method may include verifying the target computer-readable storage medium 11 has been sanitised (and this may be done automatically without user input).

The verification may be performed by the media sanitisation module 4, and may be performed by the verification submodule 46.

The verification may include writing verification data to the target computer-readable storage medium 11 before executing the data sanitisation method. The verification may include, after executing the data sanitisation method, attempting to recover the verification data from the target computer-readable storage medium 11, and the sanitisation may be determined to have succeeded if the verification data is unrecoverable after execution of the selected data sanitisation method.

The verification data may include predetermined data, random data, or a hash value associated with the target device 1, such as a hash value associated with one or more target device characterisation parameters, for example.

The media sanitisation module 4 and/or the asset inventory submodule 48 may verify that the verification data is unrecoverable by searching for the verification data in the location at which the verification data was written or by searching the entire target computer-readable storage medium 11, for example.

The verification may include verifying, before executing the data sanitisation method, that the verification data has been successfully written to the target computer-readable storage medium 11. This may include reading the verification data from the target computer-readable storage medium 11, and may include confirming that the verification data that is read from the target computer-readable storage medium 11 corresponds to, or matches, the verification data that was written to (or instructed to be written to) the target computer-readable storage medium 11. In some cases if the media sanitisation module 4 is unable to write the verification data to the target computer-readable storage medium 11 then the target device 1 may be rejected and the user notified as described previously.

In some cases the verification data may be rendered irretrievable or unrecoverable by erasure, overwriting, or by cryptographic means (e.g. by encryption or by erasure or overwriting of a required cryptographic key).

If the verification indicates that the data sanitisation failed, the fallback data sanitisation method may be performed and optionally verified. The sanitisation verification may be performed for each data sanitisation method in the series of selected data sanitisation methods. The media sanitisation method may include executing each data sanitisation method in the series of selected data sanitisation methods (in the order indicated by their priorities, beginning with the primary data sanitisation method) until the sanitisation verification indicates that the target computer-readable storage medium 11 has been sanitised.

The media sanitisation method may include reporting the outcome of the data sanitisation method to the user (and this may be done automatically without user input). A certificate may be generated if the data sanitisation succeeded. The reporting submodule 47 may handle the reporting and/or certificate generation. The certificate may be stored on the sanitisation computer-readable storage medium 21 and/or uploaded to a server, for example. The certificate may be accessible via a web portal, for example. The certificate may be sent to the remote device 6, for example. The certificate may include an indication of the successful data sanitisation method.

If the data sanitisation method failed, the user may be notified, e.g. via the display 15, 25.

The media sanitisation method may include generating a computer-readable code, such as a QR code (and this may be done automatically without user input). The computer-readable code may be generated by the reporting submodule 47. The computer-readable code may link to the certificate. The media sanitisation method may include tagging the target device 1 with the computer-readable code, and the tagging of the target device 1 with the computer-readable code may be performed by a user, for example by attaching a physical embodiment of the computer-readable code to the target device 1. For example, the user may print the computer-readable code and attach the printed code to the target device 1 (e.g. using an adhesive). The media sanitisation method may further include reading the computer-readable code to access the certificate. A third party may, therefore, easily confirm that the target device 1 has been sanitised.

In some versions at least a part of, and optionally all of, the media sanitisation module 4 may run on the media sanitisation apparatus 2. The media sanitisation apparatus 2 may in particular be a portable apparatus, such as a laptop, tablet, smartphone or similar. The media sanitisation apparatus 2 may include the power source 24 to provide operating power for the media sanitisation apparatus 2. The media sanitisation apparatus 2 may be communicatively coupled to the target device 1 to enable performance of the media sanitisation method, for example by a USB or network connection. The present technology includes, therefore, a portable media sanitisation apparatus that can be used to sanitise a target device 1 safely and easily.

In some versions at least a part of the media sanitisation module 4 may run on the remote device 6, and may be cloud-based. The present technology may, therefore, enable secure media sanitisation remotely.

The media sanitisation module 4 may be operably coupled / communicatively coupled to a plurality of target devices 1 simultaneously. For example, the media sanitisation module 4 may be connected to a network to which a plurality of target devices 1 are connected (such as a LAN, for example). The media sanitisation module 4 may sanitise each of the connected devices using the media sanitisation methods described herein. The tracking submodule 45 may track the media sanitisation process for each connected target device 1 and route relevant communications to the respective target devices 1, for example. An instance of the asset inventory submodule 48 may execute on each connected target device 1, for example, and may send data back to the tracking submodule 45, which may route the data to another submodule such as the method selection submodule 44 for example. The submodules other than the asset inventory submodule 48 may execute on the media sanitisation apparatus 2, or on the remote device 6, for example. The media sanitisation module 4 may therefore be distributed across a plurality of devices and/or processors.

The media sanitisation method described herein may eliminate the need for user interaction during the media sanitisation process, eliminating the possibility of human error and enabling unskilled persons to safely sanitise a storage device. For example, the media sanitisation module 4 may, as described, determine an appropriate data sanitisation method for the target device 1 and automatically sanitise the target device 1 using the determined data sanitisation method, without requiring any user input (such as a choice of sanitisation method or input of instructions defining a sanitisation method, for example).

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A computer-implemented media sanitisation method for automatically sanitising a computer-readable storage medium, the method comprising:
establishing a communications link between a target device and a media sanitisation module, wherein the target device includes a target computer-readable storage medium;
sending, using the communications link, target device characterisation parameters from the target device to the media sanitisation module;
automatically determining, at the media sanitisation module, a data sanitisation method associated with the target device characterisation parameters;
automatically sending, using the communications link, an indication of the data sanitisation method from the media sanitisation module to the target device; and
automatically executing the data sanitisation method to sanitise the target computer-readable storage medium.

2. A method according to any preceding claim, wherein the target device characterisation parameters include one or more of a target device make, target device model, target device serial number, target computer-readable storage medium type, target computer-readable storage medium size, target computer-readable storage medium communication protocol, and/or a security layer.

3. A method according to claim 2, further including:
if the target device characterisation parameters indicate that the target device has a security layer that is compatible with the media sanitisation module, executing the data sanitisation method, and
if the target device characterisation parameters indicate that the target device has a security layer that is incompatible with the media sanitisation module, rejecting the target device.

4. A method according to any preceding claim, further including:
determining a health status of the target computer-readable storage medium;
if the health status indicates that the target computer-readable storage medium is healthy, executing the data sanitisation method; and
if the health status indicates that the target computer-readable storage medium is faulty, rejecting the target device.

5. A method according to claim 3 or **4,** further including notifying a user if the target device is rejected.

6. A method according to claim 4 or claim 5 when dependent on claim **4,** wherein:
a) the health status is determined by performing a read and write test on the target computer-readable storage medium; or
b) the health status is determined by obtaining health data from a target device diagnostic monitoring system stored on the target computer-readable storage medium; or
c) the health status is determined by obtaining health data from a target device diagnostic monitoring system stored on the target computer-readable storage medium and the target device diagnostic monitoring system is a Self-Monitoring, Analysis, and Reporting Technology (SMART) system.

7. A method according to any preceding claim, further including verifying the target computer-readable storage medium has been sanitised.

8. A method according to claim 7, further including notifying a user if the sanitisation succeeded or failed.

9. A method according to claim 7 or 8, wherein the verification is performed by:
writing verification data to the target computer-readable storage medium before executing the data sanitisation method;
verifying, before executing the data sanitisation method, that the verification data has been successfully written to the target computer-readable storage medium; and
after executing the data sanitisation method, attempting to recover the verification data from the target computer-readable storage medium,
wherein the sanitisation succeeded if the verification data is unrecoverable after execution of the data sanitisation method.

10. A method according to any of claims 7-9, further including generating a certificate if the sanitisation succeeded.

11. A method according to any preceding claim, wherein the data sanitisation method includes a primary data sanitisation method and a fallback data sanitisation method, and the media sanitisation method includes:
executing, at the target device, the primary data sanitisation method; and
if the primary data sanitisation method failed to sanitise the target computer-readable storage medium, executing, at the target device, the fallback data sanitisation method to sanitise the target computer-readable storage medium.

12. A computer-readable storage medium storing instructions which, when executed by a processor or processors, cause the method of any preceding claim to be performed.

13. A media sanitisation method, comprising:
carrying out the computer-implemented method of claim 10; and
generating a computer-readable code linking to the certificate and tagging the target device with the computer-readable code.

14. A media sanitisation apparatus comprising a sanitisation processor operably coupled to a sanitisation computer-readable storage medium storing a media sanitisation module thereon, wherein:
the media sanitisation apparatus is configured to run the media sanitisation module using the sanitisation processor, and the media sanitisation module is configured to:
obtain target device characterisation parameters from a target device;
automatically determine a data sanitisation method associated with the characterisation parameters and to send an indication of the data sanitisation method to the target device; and
automatically execute the data sanitisation method to sanitise a target computer-readable storage medium of the target device.

15. A system comprising the media sanitisation apparatus of claim 14 and the target device.
